# EUROPEAN PATENT APPLICATION

(11) **EP 4 659 632 A1**
(43) Date of publication of application: **10.12.2025**
(21) Application number: 25162902.8
(22) Date of filing: 11.03.2025
(51) Int. Cl.: A47G 19/22, B65D 47/32, B65D 47/20

(54) **DRINKING MEMBER WITH VENT FOR A BEVERAGE CONTAINER**

(30) Priority: 11.03.2024 US 202463563953 P
(71) Applicant: Thermos L.L.C., Schaumburg, IL 60173 (US)
(72) Inventor: LANE, Marvin, Brandon, MS (US)
(74) Representative: Barker Brettell LLP

(57) **Abstract**

A lid assembly (50) for a beverage container (20). The lid assembly (50) comprising a lid (100) and a drinking member (200). The drinking member (200) comprises a vent (220) to relieve vacuum pressure and a fluid passage (225) to dispense a beverage for drinking. The fluid passage (225) includes an outlet portion (210) and a lower portion (270). The vent (220) includes an upper opening (230) and a lower opening (250). A valve (221) is positioned between the upper opening (230) and the lower opening (250). The valve (221) includes a first flexible member (222) and a second flexible member (224). The first flexible member (222) and the second flexible member (224) are configured to bend or deform to open the valve (221). A beverage container system (10) comprising the lid assembly (50) is also disclosed.

## Description

This application claims priority to U.S. Provisional Patent Application No. 63/563,953 filed March 11, 2024, which is hereby incorporated by reference in its entirety.

### Field of Invention

The present invention relates to a drinking member with a vent for a beverage container.

### Background of Invention

Beverage containers may be accidentally or inadvertently tipped over leading to spills or leaks. Children may be especially prone to leaving their beverage containers tipped over, which may result in spills or leaks.

### Summary

Certain aspects of a drinking member with a vent for a beverage container are described. In one aspect, the drinking member is a portion of a lid assembly for the beverage container. The vent assists in reducing a vacuum from forming in the beverage container while the user is drinking from the beverage container. The vent may include a valve to reduce spills or leaks when the drinking container is accidentally or inadvertently tipped over.

The lid assembly includes the drinking member and a lid. The lid is configured to engage or connect to an upper portion or neck region of the beverage container. The lid is configured to hold or secure the drinking member to the beverage container. The lid may include an optional lid cover.

In an aspect, the drinking member includes an outlet portion, a vent, a flange portion, and a lower portion. The outlet portion includes an outlet to dispense the beverage for drinking. The user may drink directly form the outlet portion. The outlet portion may include a straw shape. The outlet portion is in fluidic communication with the lower portion. The vent includes an upper opening and a lower opening. The lower portion is configured to fluidly connect to an interior volume of the beverage container. For example, the lower portion may engage to an interior straw member within the beverage container.

The vent of the drinking member helps to minimize or reduce vacuum pressure from building up inside of the container when the user is drinking from the container. As the user removes fluid from the container via drinking, ambient air may enter the container via the vent to prevent or reduce a vacuum forming inside of the container. The ambient air may pass through a valve in the vent. The valve may open under vacuum pressure conditions caused by the drinking. At normal pressure conditions, the valve is generally closed to help prevent spills or leaks from the vent when the drinking container is accidentally or inadvertently tipped over.

In another aspect, a lid assembly for a beverage container is described. The lid assembly includes a lid and a drinking member. The drinking member includes a vent to relieve vacuum pressure and a fluid passage to dispense a beverage for drinking. The fluid passage include an outlet portion and a lower portion. The vent includes an upper opening and a lower opening. A valve is positioned between the upper opening and the lower opening. The valve includes a first flexible member and a second flexible member. The first flexible member and the second flexible member are configured to bend or deform to open the valve.

In another aspect, a lid assembly for a beverage container is described. Th lid assembly includes a lid and a drinking member. The drinking member includes an outlet portion, a vent, a flange portion, and a lower portion. The outlet portion includes an outlet to dispense a beverage for drinking. The outlet portion extends from the flange portion. The outlet portion is in fluidic communication with the lower portion. The vent includes an upper opening and a lower opening. A valve is positioned in the vent between the upper opening and the lower opening. The valve is configured to open in response to a vacuum pressure.

In another aspect, a lid assembly for a beverage container is described. Th lid assembly includes a lid and a drinking member. The drinking member includes a vent and an outlet to dispense a beverage for drinking. The vent includes an upper opening and a lower opening. A valve is positioned between the upper opening and the lower opening. The valve includes at least one flexible member. The valve is configured to remain in a closed position under normal pressure conditions. The valve is configured to move to an open position under vacuum pressure conditions.

In one aspect, the vent includes one or more flexible members that are configured to relieve vacuum pressure. The flexible members are interior of the vent.

In one aspect, the vent includes a valve configured to relieve vacuum pressure and prevent leakage. The valve is interior of the vent.

In other aspects, a beverage container system including any of the drinking members of the present disclosure and a beverage container is described.

### Brief Description of Drawings

**FIG. 1** is a perspective view of the beverage container system;
**FIG. 2** is a side view of an upper portion of the beverage container system with the lid in an open position;
**FIG. 3** is a perspective view of the lid assembly and the beverage container;
**FIG. 4** is a sectional view of the lid assembly and the beverage container;
**FIG. 5** is a sectional view of the lid assembly and the beverage container;
**FIG. 6** is a perspective view of the drinking member;
**FIG. 7** is a perspective view of the drinking member;
**FIG. 8** is a close-up sectional view of the stopper in the upper opening of the vent; and
**FIG. 9** is a close-up perspective view of the upper opening of the vent.

### Detailed Description of Invention

For purposes of this application, any terms that describe relative position (e.g., "upper", "middle" "lower", "outer", "inner", "above", "below", "bottom", "top", etc.) refer to an aspect of the invention as illustrated, but those terms do not limit the orientation in which the embodiments can be used.

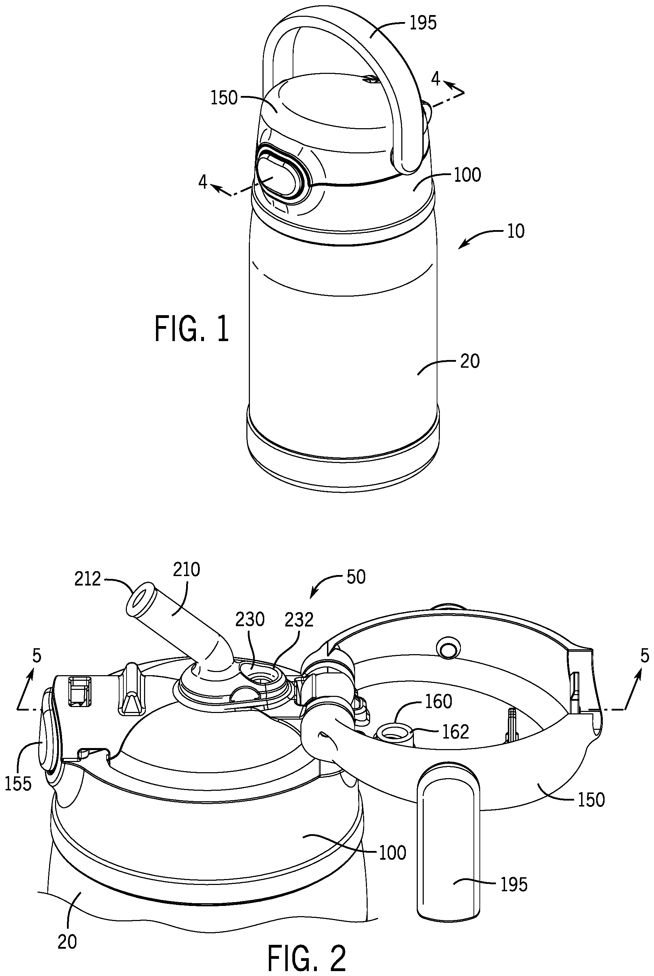

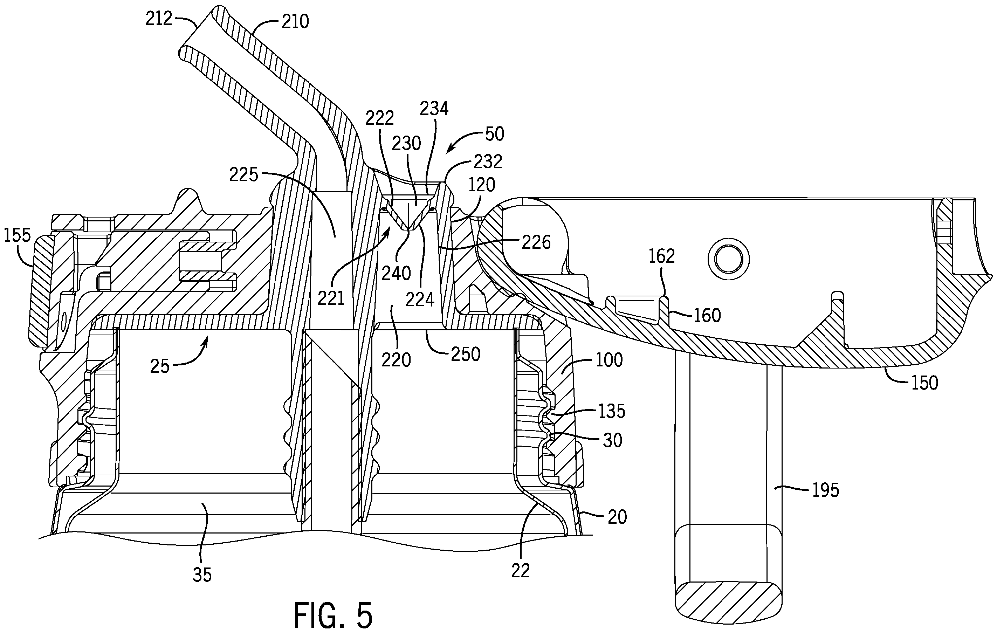

A beverage container system 10 will now be described with reference to FIGS. 1-9. The beverage container system 10 includes a beverage container 20 to hold a beverage and a lid assembly 50 to selectively close the beverage container 20. The lid assembly 50 may engage with the beverage container 20 to form the beverage container system 10.

The lid assembly includes a lid 100 and a drinking member 200. The lid 100 is configured to engage or connect to an upper portion or neck region of the beverage container 20. The lid 100 is configured to hold or secure the drinking member 200 to the beverage container 20. The lid 100 may include an optional lid cover 150.

The drinking member 200 includes a fluid passage 225, a vent 220, and flange portion 260. The fluid passage 225 includes an outlet portion 210 and a lower portion 270. The flange portion 260 generally covers or closes an opening 25 of the beverage container 20. The outlet portion 210 and the lower portion 270 generally provide for fluid to pass from the beverage container 20 and through the flange portion 260. The vent 220 generally provides for ambient air to pass through the flange portion 260 and into the beverage container 20. The vent 220 includes an upper opening 230 and a lower opening 250. The outlet portion 210 includes an outlet 212 to dispense the beverage from the beverage container 20 for drinking. The outlet portion 210 is in fluidic communication with the lower portion 270. The lower portion 270 is configured to fluidly connect to an interior volume of the beverage container 20. An additional straw or tube may connect to the lower portion 270 in order extend deeper into the container 20.

The drinking member 200 includes a number of different versions, configurations or varieties, depending on drinking style or preference of the user. The drinking member 200 may include a straw shape (as shown in FIGS. 1-9), a spout, or other opening, or another opening to receive an additional straw.

The lid 100 removably connects or engages to the beverage container 20 to hold the lid assembly 50 to the beverage container 20. In order to fill the container 20 with a beverage, the lid 100 may be unscrewed from the beverage container 20.

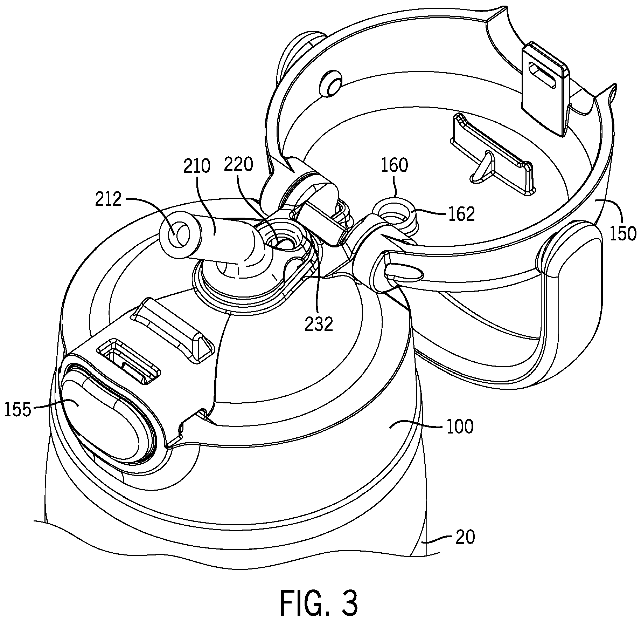

The lid cover 150 will now be described. In the aspect of FIGS. 1-9, the lid cover 150 hingedly engages to the lid 100. The lid cover 150 may move between an open position, as shown in FIG. 1, and a closed position, as shown in FIGS. 2 and 3.

The lid cover 150 may include a push-button locking mechanism 155 that provides for the lid cover 150 to be held closed until the user actuates the push-button locking mechanism 155. In this aspect, a closing of the lid cover 150 may bend the drinking member 200 downward and crimp the drinking member 200. When the lid cover 150 is opened, the drinking member 200 may extend upward.

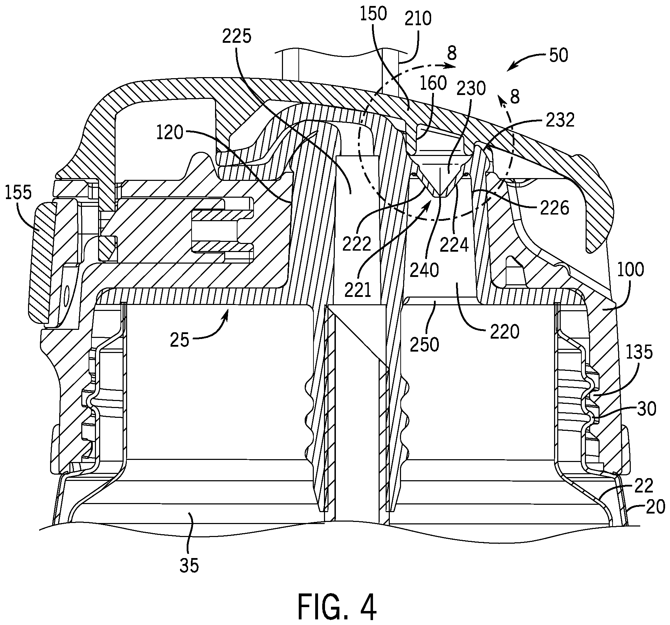

When the lid cover 150 is moved to the closed or storage position, the drinking member 200 is generally covered, which helps to reduce dirt, contamination, germs etc. from contacting the drinking member 200. A lower surface of the lid cover 150 may include a stopper 160 configured to close the upper opening 230 of the vent 220. With respect to FIG. 4, the stopper 160 is inserted into the upper opening 230 of the vent 220 when the lid cover 150 is closed. This reduces leakage from the beverage container 20. When the lid cover 150 is opened, the vent 220 is immediately opened. Also, when the lid cover 150 is in the open position, a valve 221 of the vent 220 reduces leakage from the container via the vent 220 if the container 20 is turned on its side.

The upper opening 230 includes an extending rim 232 that is sized and configured to receive the stopper 160. In certain aspects, such as shown in FIGS. 1-9, the stopper 160 may be in the shape of a post with a rounded or circular outer diameter. The stopper 160 may include a hollow, partially hollow, or solid interior. The upper opening 230 may include a rounded or circular inner diameter configured to receive the rounded or circular outer diameter of the stopper 160. The upper opening 230 may include a shelf portion 234 that slightly extends or protrudes into the upper opening 230 configured to receive a distal portion 162 of the stopper 160. The distal portion 162 of the stopper 160 may seal or close against the shelf portion 234.

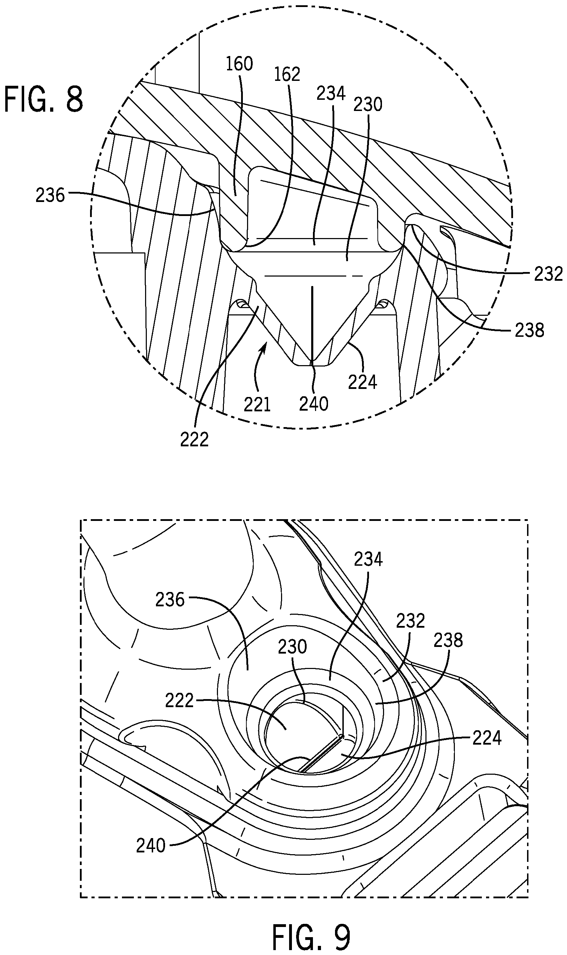

With respect to FIG. 9, in certain aspects, the central body portion 205 includes walls 236 and 238 with varying slopes between the extending rim 232 and the shelf portion 234. In this aspect, the wall 236 has a smaller slope than a slope of the wall 238. The more gradual slope or taper of the wall 236 promotes the insertion of the stopper 160 into the upper opening 230.

The vent 220 includes an interior wall 226 defining a generally circular cross-section. The vent 220 may reduce a vacuum from forming within the container 20. The vent 220 may include or form the valve 221. The valve 221 reduces leakage of fluid from the container 20 via the vent 220, but the valve 221 still allows ambient air to pass into the container 20.

In aspect of FIGS. 1-9, the valve 221 includes first and second flexible members 222 and 224 that taper inward and define an interior valve passage 240. The interior valve passage 240 is between the upper opening 230 and the lower opening 250. The flexible members 222 and 224 may include two flaps that taper into each other and form the interior valve passage 240. In this aspect, the interior valve passage 240 is a slit between the flexible members 222 and 224. The interior valve passage 240 has a generally linear shape. The flexible members 222 and 224 extend inwardly from the interior wall 226 of the vent 220. In this aspect, the flexible members 222 and 224 extend inwardly and angle downward from the interior wall 226 of the vent 220. When a vacuum builds within the container 20, the flexible members 222 and 224 may bend, flex, and/or deform to provide for ambient air to pass through the vent 220 and into the interior of the beverage container 20. The amount or range of movement of the flexible members 222 and 224 may depend on the particular lid assembly 50 and its intended operating characteristics. The amount or range of movement may be increased to provide greater venting capability. The amount or range of movement may be decreased to reduce leakage.

The valve 221 may be positioned between the upper opening 230 and the lower opening 250 of the vent 220. The valve 221 is configured to generally provide a one-way flow of ambient air into the beverage container 20 when a vacuum pressure increases in the beverage container 20. The valve 221 is configured to reduce or mostly prevent liquid from passing from the container 20 and through the vent 220. At normal pressures, the valve 221 is generally closed to prevent the leakage of any fluid via the vent 220. This reduces leakage from the container 20 when the beverage container system 10 is turned over or on its side. In certain aspects, the valve 221 may include a duck-bill valve. In the aspect of FIGS. 1-9, the valve 221 is positioned directly below the upper opening 230. In the aspect of FIGS. 1-9, the valve 221 is positioned directly below the extending rim 232. In other aspects, the valve 221 may be positioned between the upper opening 230 and the lower opening 250.

In other aspects, the valve 221 may include a single flexible member. For example, the single flexible member may move or bend away from the interior wall 226 of the vent 220 to provide to release vacuum pressure from within the container 20. In other aspects, the valve 221 may include three or more flexible members that move or bend to release vacuum pressure from within the container 20.

The drinking member 200 includes a central body portion 205 positioned between the outlet portion 210 and the lower portion 270. The vent 220 and a middle portion of the fluid passage 225 may be generally parallel in the central body portion 205.

The lower opening 250 of the vent 220 is formed at a lower surface of the flange portion 260. The upper opening 230 of the vent 220 is positioned proximate the outlet portion 210.

The lower portion 270 may include a ribbed structure to engage another straw (not shown). In other aspects, the lower portion 270 may be lengthened such that no additional straw is needed.

In this aspect, a lower surface of the lid 100 may include a cup-like or generally open shape to receive the drinking member 200. The drinking member 200 may nest into a lower central region of the lid 100. The lid 100 may include an opening 120 for the outlet portion 210 pass through the lid 100.

The drinking member 200 may be formed from a pliable or resilient material such as silicone or other suitable elastomers. The drinking member 200 may be formed from liquid injection techniques.

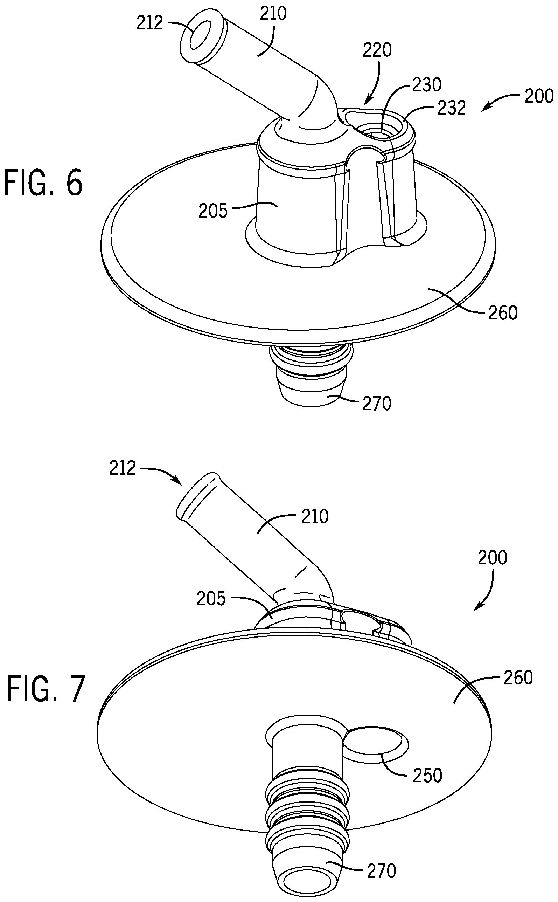

The drinking member 200 may include the outlet portion 210, the central body portion 205, the vent 220, the flange portion 260, and the lower portion 270 formed as one-piece or integral unit. As shown in FIGS. 6 and 7, the central body portion 205 and the outlet portion 210 extend from an upper side of the flange portion 260, and the lower portion 270 extends from a lower side of the flange portion 260. The flange portion 260 may seal against a side wall of the lid 100 or a rim portion of the beverage container 20. The lid cover 150 may squeeze or urge the flange portion 260 against the beverage container 20 to provide a sealing closure.

In this aspect, the lid 100 includes a handle 195 extending from a side wall of the lid cover 150. In other aspects, the handle 195 may be omitted.

An inner sidewall of the lid 100 include interior threads 135 that are positioned on a generally circular inner diameter of the lid 100. The interior threads 135 threadably engage with exterior threads 30 of the beverage container 20. The beverage container 20 includes walls 22 defining an interior volume 35 to hold a beverage.

In other aspects, the lid 100 may engage to the beverage container 20 in other manners than a threaded engagement, including a snap-fit engagement, frictional engagement, bayonet engagement, or other engagements configured to selectively attach the lid 100 to the beverage container 20.

In this aspect, the container 20 has a thermally insulated, double wall construction. In other aspects, the container 20 includes a non-insulated single-layer or multilayer construction or other insulated constructions. The container 20 may be formed from moldable food-grade plastics, thermoplastics, stainless steel, other metals and metal alloys, other plastics, or any combination thereof.

As such, it should be understood that the disclosure is not limited to the particular aspects described herein, but that various changes and modifications may be made without departing from the spirit and scope of this novel concept as defined by the following claims. Further, many other advantages of applicant's disclosure will be apparent to those skilled in the art from the above descriptions and the claims below.

## Claims

1. A lid assembly for a beverage container comprising:
a lid;
a drinking member;
the drinking member comprising a vent to relieve vacuum pressure and a fluid passage to dispense a beverage for drinking;
the fluid passage includes an outlet portion and a lower portion;
the vent includes an upper opening and a lower opening;
a valve is positioned between the upper opening and the lower opening;
the valve includes a first flexible member and a second flexible member; and,
the first flexible member and the second flexible member are configured to bend or deform to open the valve.

2. The lid assembly according to claim 1, wherein the first and second flexible members extend inwardly and downwardly from an interior wall of the vent.

3. The lid assembly according to claim 1 or claim 2, wherein a valve passage is formed between the first and second flexible members.

4. The lid assembly according to claim 3, wherein:
(a) the valve passage has a generally linear or slit shape; and/or
(b) the first and second flexible members include two flaps that taper into each other and form the valve passage.

5. The lid assembly according to claim 1, or any other preceding claim, wherein the valve is configured to remain in a closed position under normal pressure conditions, and the valve is configured to move to an open position under vacuum pressure conditions; and optionally or preferably:
wherein, in the closed position, the valve reduces leakage of a beverage, and, wherein, in the open position, the valve permits passage of ambient air.

6. The lid assembly according to claim 1, or any other preceding claim, wherein the vent reduces vacuum pressure from building up in a beverage container engaged to the lid assembly, and the valve reduces a leaking of liquids through the vent from the beverage container.

7. The lid assembly according to claim 1, or any other preceding claim, wherein the valve is configured to remain in a closed position under normal pressure conditions to reduce a leaking of liquids through the vent from a beverage container engaged to the lid assembly, and the valve is configured to move to an open position under vacuum pressure conditions in the beverage container to permit ambient air to enter the beverage container through the vent and reduce the vacuum pressure conditions.

8. The lid assembly according to claim 1, or any other preceding claim, wherein the drinking member comprises an outlet portion, the vent, a flange portion, and a lower portion, the outlet portion includes an outlet to dispense a beverage for drinking, the outlet portion extends from the flange portion, the outlet portion is in fluidic communication with the lower portion; and optionally or preferably:
wherein the flange portion is configured to seal against a rim or wall of a container engaged to the lid assembly.

9. The lid assembly according to claim 1, or any other preceding claim, wherein any one or more of:
(a) the lid assembly further comprises a lid cover, wherein the vent is opened upon opening the lid cover;
(b) the upper opening of the vent includes an extending rim that is sized and configured to receive a stopper extending from an inner surface of a lid cover, wherein the lid cover is hingedly engaged to the lid; and/or
(c) the lid is configured to secure the drinking member to the beverage container.

10. A lid assembly for a beverage container comprising:
a lid;
a drinking member;
the drinking member comprising an outlet portion, a vent, a flange portion, and a lower portion;
the outlet portion includes an outlet to dispense a beverage for drinking;
the outlet portion extends from the flange portion;
the outlet portion is in fluidic communication with the lower portion;
the vent includes an upper opening and a lower opening;
a valve is positioned in the vent between the upper opening and the lower opening; and
the valve is configured to open in response to a vacuum pressure.

11. The lid assembly according to claim 10, wherein the outlet portion, the vent, the flange portion, and the lower portion are integral.

12. The lid assembly according to claim 10 or claim 11, wherein the lower portion is configured to fluidly connect to an interior volume of the beverage container to provide for ambient air to enter the beverage container via the vent.

13. A lid assembly, comprising:
a lid;
a drinking member;
the drinking member comprising a vent and an outlet to dispense a beverage for drinking;
the vent includes an upper opening and a lower opening;
a valve is positioned between the upper opening and the lower opening;
the valve includes at least one flexible member;
the valve is configured to remain in a closed position under normal pressure conditions; and,
the valve is configured to move to an open position under vacuum pressure conditions.

14. The lid assembly according to claim 13, wherein the at least one flexible member is configured to bend or deform to open a valve passage of the valve.

15. A beverage container system, comprising the lid assembly according to claim 1, or any other preceding claim, and further comprising a beverage container, and the lower opening is configured to fluidly connect to an interior volume of the beverage container to provide for ambient air to enter the beverage container via the vent.
